# FASCICULE DE BREVET EUROPEEN

(11) **EP 0 610 795 B1**
(45) Date de publication et mention de la délivrance du brevet: **19.07.1995**
(21) Numéro de dépôt: 94101557.0
(22) Date de dépôt: 02.02.1994
(51) Int. Cl.: A47J 31/54

(54) **Appareil ménager électrique destiné à la préparation de boissons infusées comportant un dispositif de commande**
Ein elektrisches Haushaltsgerät zum Bereiten von Infusions-Getränken mit einer Regelvorrichtung
Electrical household appliance to prepare infusions comprising a controlling unit

(30) Priorité: 10.02.1993 FR 9301445
(43) Date de publication de la demande: 17.08.1994
(73) Titulaire: MOULINEX S.A., F-93170 Bagnolet (FR); ROBERT KRUPS GmbH & Co. KG, 42704 Solingen (DE)
(72) Inventeur: Bailleux, Jean-Philippe, F-61250 Damigny (FR); Storsberg, Gregor, D-42655 Solingen (DE); Buchmann, Stephan, D-42655 Solingen (DE)
(74) Mandataire: May, Hans Ulrich, Dr.

(56) Documents cités:
- EP-A- 0 186 097
- DE-A- 2 813 684
- DE-A- 3 021 276
- DE-U- 8 701 916
- US-A- 3 570 390
- US-A- 4 531 046

## Description

La présente invention concerne un appareil ménager électrique destiné à la préparation de boissons infusées telles que, par exemple, le café, le thé ou une boisson similaire, et qui est du type comprenant un boîtier renfermant un réservoir d'eau froide, une plaque chauffante supportant un collecteur d'infusion, un chauffe-eau relié thermiquement à la plaque et comportant une conduite reliée au réservoir d'eau froide et une conduite ascendante reliée à une goulotte d'arrosage d'un filtre à infusion disposé au-dessus du collecteur d'infusion, une résistance électrique de chauffage du chauffe-eau reliée à un circuit électrique d'alimentation, et un dispositif de commande agencé dans le circuit électrique d'alimentation et adapté à alimenter la résistance électrique dans une première phase de façon continue.

Un tel appareil du type cafetière est connu par le document EP-A-186 097.

Les cafetières ou théières de ce genre tel que décrit dans le document précité, s'avèrent en général assez mal adaptées à la préparation de petites quantités de boisson. Lors de la mise en route de l'appareil, l'eau contenue dans le chauffe-eau est rapidement portée à ébullition, ce qui déplace la colonne d'eau encore froide de la partie ascendante de la conduite vers la goulotte d'arrosage et par conséquent de l'eau froide est déversée sur la mouture à infuser. D'un autre côté, le collecteur d'infusion destiné à recueillir la boisson est également froid lorsque les premières gouttes de café ou de thé s'y déversent. Le collecteur d'infusion est en général une verseuse en verre, donc en un matériau mauvais conducteur de la chaleur dans lequel la chaleur de la plaque chauffante ne diffuse que lentement.

Il en résulte que, lorsqu'on ne souhaite préparer qu'une petite quantité de café ou de thé, par exemple une ou deux tasses, celle-ci est souvent tiède et insipide.

Pour remédier à cet inconvénient, on adapte en général à la sortie du réservoir d'eau froide une vanne qui n'est ouverte que lorsque la conduite, la plaque chauffante et la verseuse ont atteint une température prédéterminée.

Ce système, bien que résolvant le problème évoqué, n'est cependant pas satisfaisant. Effectivement, le montage d'une vanne à la sortie du réservoir d'eau, qu'elle soit mécanique ou électromagnétique, reste une solution particulièrement coûteuse. Par ailleurs, le chauffe-eau étant chauffé "à sec", il se produit lors de l'ouverture de la vanne un coup de vapeur qui même s'il permet de lutter activement contre les dépôts calcaires, est particulièrement bruyant et peu rassurant pour l'utilisateur.

Le but de la présente invention est de réaliser de façon simple un appareil ménager électrique pour la préparation de boissons infusées, du type comprenant un chauffe-eau chauffé par une résistance, qui permet de réaliser de petites quantités de boisson. Un autre but est de réaliser un dispositif de commande qui soit adaptable à des cafetières ou théières électriques existant sur le marché de manière à corriger les effets indésirables de la production de boisson tiède lors de la mise en marche.

Selon la présente invention, un appareil ménager électrique du type décrit précédemment, est plus particulièrement caractérisé en ce que le dispositif de commande est en outre adapté à alimenter dans une deuxième phase précédant la première la résistance électrique de façon intermittente par des impulsions de courant de durée déterminée, séparées par des temps de pause également de durée déterminée.

Grâce à l'invention, la plaque chauffante et le chauffe-eau sont lors de la mise en marche de l'appareil portés à température de telle manière que l'eau du chauffe-eau n'arrive pas trop rapidement à ébullition, et que la verseuse posée sur la plaque de chauffage soit préchauffée avant l'infusion. D'autres caractéristiques préférentielles sont contenues dans les revendications dépendantes 2-9.

Les caractéristiques, détails et avantages de l'invention ressortiront d'ailleurs de la description qui va suivre, à titre d'exemple, en référence aux dessins annexés dans lesquels :
- la figure 1 est une vue schématique d'une cafetière électrique à chauffe-eau en continu selon l'invention,
- la figure 2 est une représentation du schéma électrique d'un dispositif de commande illustrant l'alimentation d'une résistance de chauffage du chauffe-eau,
- la figure 3 est une représentation graphique du courant d'alimentation appliqué à la résistance chauffante.

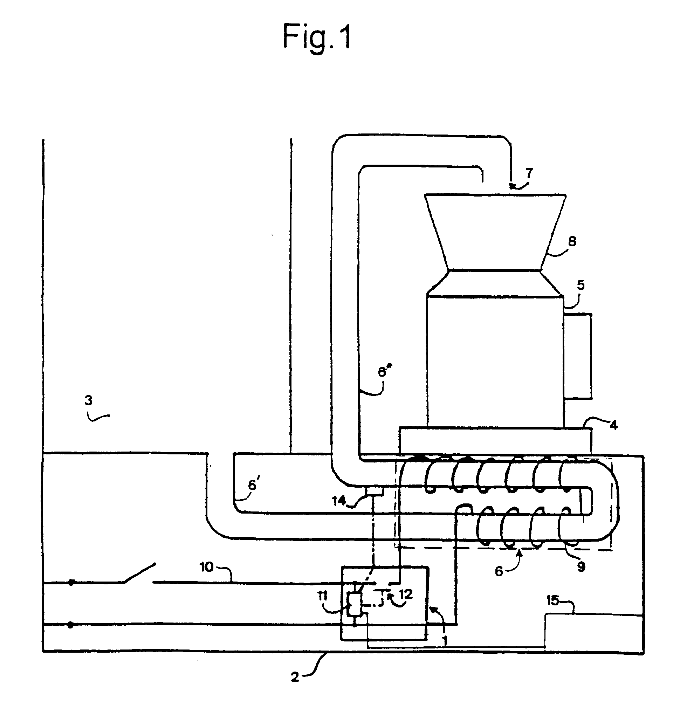

Le dispositif de commande 1 est destiné à un appareil ménager de préparation de boissons infusées tel que par exemple une cafetière du type dit goutte à goutte et comprenant, comme représenté à la figure 1, un boîtier 2 renfermant un réservoir d'eau froide 3, une plaque chauffante 4, destinée à supporter un collecteur d'infusion 5, un chauffe-eau en continu 6 relié thermiquement à la plaque 4 et comprenant une conduite 6' reliée au réservoir d'eau froide et une conduite ascendante 6'' reliée à une goulotte d'arrosage 7 d'un filtre à infusion 8 disposé au-dessus du collecteur d'infusions 5, qui est en général une verseuse en verre, et une résistance électrique de chauffage 9 de la plaque 4 et du chauffe-eau 6, reliée à un circuit électrique 10 d'alimentation.

Selon l'invention, le dispositif 1 est monté dans le circuit électrique 10 d'alimentation et, est adapté à alimenter la résistance électrique 9 dans une première phase de façon intermittente par des impulsions de courant de durée déterminée, séparées par des temps de pause également de durée déterminée, et dans une deuxième phase de façon continue.

Lorsque la cafetière comprend en outre un dispositif de régulation 13, par exemple un thermostat ou un dispositif de sécurité qui coupe l'alimentation de la résistance lorsque l'appareil est surchauffé, la seconde phase d'alimentation en continue peut néanmoins être momentanément interrompue de façon cyclique par ce thermostat.

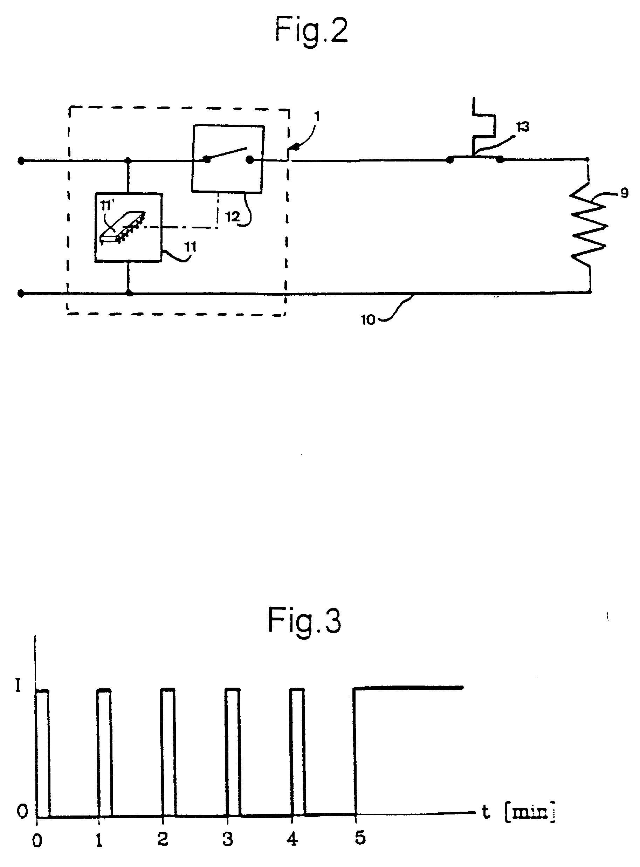

La commandé de l'alimentation de la résistance chauffante 9 est réalisée par ouverture et fermeture du circuit d'alimentation 10. Effectivement, comme cela est illustré à la figure 2, le dispositif électronique 1 comprend une unité de contrôle 11 pilotant un moyen de commutation 12 de l'alimentation de la résistance.

Le moyen de commutation 12 est monté dans le circuit électrique 10 et peut occuper deux états, soit un état conducteur où il ferme le circuit 10, soit un état non conducteur où le circuit est ouvert.

Le moyen de commutation sera avantageusement réalisé à partir d'un relais ou d'un interrupteur électronique à semi-conducteur, tel qu'un triac par exemple.

Selon une réalisation préférée de l'invention, l'unité de contrôle 11 du dispositif comprend un microprocesseur 11' et une horloge adaptée à délivrer par l'intermédiaire d'un étage de sortie un signal de commande appliqué soit à la bobine d'un relais, ou à la gâchette d'un triac.

Le microprocesseur 11' de l'unité de contrôle pourra par ailleurs intégrer d'autres fonctions telles que la régulation en température de la résistance, ou différentes fonctions de sécurité, en tenant compte par exemple d'informations recueillies par des capteurs thermiques 14 (figure 1) placés en sortie du chauffe-eau.

De plus, il est possible de connecter au microprocesseur une unité d'affichage 15 permettant notamment d'afficher les étapes de l'évolution du processus d'infusion, par exemple une indication lumineuse verte pour la première phase et rouge pour la deuxième phase. Cette unité d'affichage permet également à partir du signal de l'horloge d'afficher par exemple l'heure.

La représentation graphique de la figure 3 du courant appliqué à la résistance de chauffage 9 montre que la durée de chaque impulsion de courant de la première phase est petite par rapport à la durée du temps de pause entre deux impulsions.

Lors de la mise sous tension du dispositif et de la cafetière, des impulsions de courant sont appliquées à la résistance qui chauffe le chauffe-eau 6 et la plaque 4.

La durée des impulsions et les temps de pause séparant deux impulsions successives doivent être déterminés de telle manière que l'eau ne parvienne pas à ébullition dans la première phase. L'eau contenue dans le chauffe-eau transmet une partie de sa chaleur à l'eau contenue dans la conduite ascendante 6'', notamment pendant les temps de pause.

La verseuse 5 réalisée en verre, donc dans un matériau assez faible conducteur thermique, est chauffée par conduction par la chaleur de la plaque chauffante 4. Effectivement, l'inertie thermique de la plaque 4 et surtout de la verseuse 5 est bien supérieure à celle du chauffe-eau et de l'eau de la conduite 6'', aussi l'intervalle de temps entre deux impulsions est mis à profit pour transférer progressivement la chaleur de la plaque 4 à la verseuse 5 sans que celle-ci n'ait le temps de se refroidir au contact de l'air par exemple.

La durée des temps de pause et le nombre d'impulsions de courant sont déterminés notamment en fonction de la vitesse de conduction thermique dans la conduite 6'' et de l'inertie thermique de la verseuse 5.

Après plusieurs impulsions, toute l'eau se trouvant dans la conduite 6'' ainsi que la verseuse 5 auront été réchauffées et la seconde phase pourra commencer.

Pendant la deuxième phase, on applique de façon continue un courant à la résistance 9. L'eau est rapidement portée à ébullition et le processus normal d'infusion commence.

Le dispositif 1 de commande pourra avantageusement être situé à l'intérieur de la cafetière ou par exemple d'une théière électrique et s'intégrer directement au circuit électronique. Une autre possibilité (non représentée sur les dessins) est de réaliser le dispositif sous la forme d'un module autonome comprenant son propre cordon d'alimentation et une prise de connexion pour une cafetière ou théière. Il est ainsi possible d'adapter le dispositif à des cafetières existant sur le marché sans avoir à intervenir sur celles-ci. Bien entendu, le module devra être programmé ou mis au point en fonction des caractéristiques de l'appareil auquel il est destiné.

Ainsi, grâce à l'invention, il est possible de réaliser, avec une cafetière classique à conduite chauffée, de très petites quantités de boisson bien chaudes, recueillies dans une verseuse préchauffée. De surcroît, le dispositif de l'invention est d'un coût particulièrement réduit et adaptable à différents modèles de cafetières ; il est même, dans une forme particulière de réalisation, utilisable pour des cafetières non équipées à l'origine d'un tel dispositif.

## Revendications

1. Appareil ménager électrique destiné à la préparation de boissons infusées telles que, par exemple, le café, le thé ou une boisson similaire, et comprenant un boîtier (2) renfermant un réservoir d'eau froide (3), une plaque chauffante (4) supportant un collecteur d'infusion (5), un chauffe-eau (6) relié thermiquement à la plaque (4) et comportant une conduite (6') reliée au réservoir d'eau froide (3) et une conduite ascendante (6'') reliée à une goulotte d'arrosage (7) d'un filtre à infusion (8) disposé au-dessus du collecteur d'infusion (5), une résistance électrique (9) de chauffage du chauffe-eau (6) reliée à un circuit électrique d'alimentation (10), et un dispositif de commande (1) agencé dans le circuit électrique d'alimentation (10) et adapté à alimenter la résistance électrique (9) dans une première phase de chauffage de façon continue,
**caractérisé en ce que** le dispositif de commande (1) est en outre adapté à alimenter dans une deuxième phase précédant la première la résistance électrique (9) de façon intermittente par des impulsions de courant de durée déterminée, séparées par des temps de pause également de durée déterminée.

2. Appareil ménager électrique selon la revendication 1,
**caractérisé en ce que** la durée de chaque impulsion est petite par rapport à la durée du temps de pause entre deux impulsions successives.

3. Appareil ménager électrique selon la revendication 1 ou 2,
**caractérisé en ce que** le dispositif de commande (1) comprend une unité de contrôle (11) pilotant un moyen de commutation (12) de l'alimentation de la résistance (9).

4. Appareil ménager électrique selon la revendication 3,
**caractérisé en ce que** l'unité de contrôle (11) comprend un microprocesseur (11').

5. Appareil ménager électrique selon la revendication 3 ou 4,
**caractérisé en ce que** le moyen de commutation (12) comprend un triac.

6. Appareil ménager électrique selon la revendication 3 ou 4,
**caractérisé en ce que** le moyen de commutation (12) comprend un relais.

7. Appareil ménager électrique selon l'une quelconque des revendications 4 à 6,
**caractérisé en ce que** le dispositif de commande (1) comprend de plus une unité d'affichage (15) des étapes du processus d'infusion commandée par le microprocesseur (11').

8. Appareil ménager électrique selon l'une quelconque des revendications 1 à 7,
**caractérisé en ce que** le dispositif de commande (1) est situé à l'intérieur du boîtier (2).

9. Appareil ménager électrique selon l'une quelconque des revendications 1 à 7,
**caractérisé en ce que** le dispositif de commande (1) est situé à l'extérieur du boîtier (2).

## Claims

1. Domestic electrical appliance designed for the preparation of infused drinks such as, for example, coffee, tea or a similar drink, and comprising a casing (2) enclosing a cold-water reservoir (3), a heating plate (4) supporting an infusion collector (5), a water heater (6) thermally connected to the plate (4) and having a pipe (6') connected to the cold-water reservoir (3) and a rising pipe (6'') connected to a spout (7) for spraying an infusion filter (8) disposed above the infusion collector (5), an electrical heating element (9) for the water heater (6) connected to an electrical supply circuit (10), and a control device (1) arranged in the electrical supply circuit (10) and adapted to supply the electrical element (9) continuously in a first phase, characterised in that the control device (1) is, moreover, adapted so as, in a second phase preceding the first, to supply the electrical element (9) intermittently with current pulses of a determined duration, separated by periods of pause, also of a determined duration.

2. Domestic electrical appliance according to Claim 1, characterised in that the duration of each pulse is small compared with the duration of the pause between two successive pulses.

3. Domestic electrical appliance according to Claim 1 or 2, characterised in that the control device (1) comprises a control unit (11) controlling a means (12) for switching the supply to the element (9).

4. Domestic electrical appliance according to Claim 3, characterised in that the control unit (11) comprises a microprocessor (11').

5. Domestic electrical appliance according to Claim 3 or 4, characterised in that the switching means (12) comprises a triac.

6. Domestic electrical appliance according to Claim 3 or 4, characterised in that the switching means (12) comprises a relay.

7. Domestic electrical appliance according to any one of Claims 4 to 6, characterised in that the control device (1) additionally comprises a unit (15) for displaying the stages in the infusion process, controlled by the microprocessor (11').

8. Domestic electrical appliance according to any one of Claims 1 to 7, characterised in that the control device (1) is situated inside the casing (2).

9. Domestic electrical appliance according to any one of Claims 1 to 7, characterised in that the control device (1) is situated outside the casing (2).

## Patentansprüche

1. Elektrisches Haushaltsgerät zur Vorbereitung aufgegossener Getränke wie beispielsweise Kaffee, Tee oder einem ähnlichen Getränk, das ein Gehäuse (2) aufweist, das einen Kaltwasserbehälter (3) umschließt, eine Heizplatte (4), die einen Aufgußsammler (5) trägt, einen Heißwasserbereiter (6), der thermisch mit der Platte (4) verbunden ist und eine mit dem Kaltwasserbehälter (3) verbundene Leitung (6') sowie eine Steigleitung (6'') aufweist, die mit einem Gießüberlauf (7) eines Aufgußfilters (8) verbunden ist, der über dem Aufgußsammler (5) angeordnet ist, einen elektrischen Widerstand (9) zum Heizen des Heißwasserbehälters (6), der mit einer elektrischen Versorgungsschaltung (10) verbunden ist, sowie eine in der elektrischen Versorgungsschaltung (10) angeordnete Steuereinrichtung (1), die zur kontinuierlichen Versorgung des elektrischen Widerstandes (9) in einer ersten Heizphase geeignet ist, aufweist,
**dadurch gekennzeichnet, daß** die Steuereinrichtung (1) ferner dazu geeignet ist, den elektrischen Widerstand (9) in einer zweiten, der ersten vorausgehenden Phase durch Stromimpulse mit bestimmter Dauer intermittierend zu versorgen, die durch Pausenzeiten mit ebenfalls bestimmter Dauer getrennt sind.

2. Elektrisches Haushaltsgerät nach Anspruch 1,
**dadurch gekennzeichnet, daß** die Dauer jedes Impulses bezüglich der Pausen zwischen zwei aufeinanderfolgenden Impulsen klein ist.

3. Elektrisches Haushaltsgerät nach Anspruch 1 oder 2,
**dadurch gekennzeichnet, daß** die Steuereinrichtung (1) eine Kontrolleinheit (11) aufweist, die ein Mittel (12) zum Umschalten der Versorgung des Widerstandes (9) steuert.

4. Elektrisches Haushaltsgerät nach Anspruch 3,
**dadadurch gekennzeichnet, daß** die Kontrolleinheit (11) einen Mikroprozessor (11') aufweist.

5. Elektrisches Haushaltsgerät nach Anspruch 3 oder 4,
**dadurch gekennzeichnet, daß** das Umschaltmittel (12) ein Triac aufweist.

6. Elektrisches Haushaltsgerät nach Anspruch 3 oder 4,
**dadurch gekennzeichnet, daß** das Umschaltmittel (12) ein Relais aufweist.

7. Elektrisches Haushaltsgerät nach einem der Ansprüche 4 bis 6,
**dadurch gekennzeichnet, daß** die Steuereinrichtung (1) ferner eine Einheit (15) zur Anzeige der Schritte des Aufgußvorgangs aufweist, die von dem Mikroprozessor (11') gesteuert wird.

8. Elektrisches Haushaltsgerät nach einem der Ansprüche 1 bis 7,
**dadurch gekennzeichnet, daß** die Steuereinrichtung (1) im Inneren des Gehäuses (2) angeordnet ist.

9. Elektrisches Haushaltsgerät nach einem der Ansprüche 1 bis 7,
**dadurch gekennzeichnet, daß** die Steuereinrichtung (1) außerhalb des Gehäuses (2) angeordnet ist.
